# EUROPÄISCHE PATENTSCHRIFT

(11) **EP 1 976 370 B1**
(45) Veröffentlichungstag und Bekanntmachung des Hinweises auf die Patenterteilung: **17.06.2009**
(21) Anmeldenummer: 06841556.1
(22) Anmeldetag: 21.12.2006
(51) Int. Cl.: A01D 89/00

(54) **GUTAUFNEHMER**
PICK-UP
DISPOSITIF DE RECEPTION DE MARCHANDISES

(30) Priorität: 11.01.2006 DE 102006001338
(43) Veröffentlichungstag der Anmeldung: 08.10.2008
(73) Patentinhaber: Deere & Company, Moline, IL 61265-8098 (US)
(72) Erfinder: POURCHET, Jérémy, F-25650 Gilley (DE); JOSSET, Etienne, F- Arc les Gray (FR)
(74) Vertreter: Holst, Sönke
(86) Internationale Anmeldenummer: PCT/EP2006/070097
(87) Internationale Veröffentlichungsnummer: WO 2007/082624

(56) Entgegenhaltungen:
- US-A1- 3 226 921
- US-B1- 6 314 709

## Beschreibung

Die Erfindung betrifft einen Gutaufnehmer, der einen Rahmen, wenigstens einen gegenüber dem Rahmen in eine Bewegung versetzbaren Zinkenträger, am Zinkenträger befestigte Zinken und quer zur Vorwärtsrichtung nebeneinander angeordnete Abstreifer umfasst, zwischen denen Zwischenräume gebildet sind durch die sich die Zinken nach außen erstrecken und entlang derer sich die Zinken bewegen können, wobei die Abstreifer ein erstes, lösbar am Rahmen befestigtes Ende und ein zweites, lösbar am Rahmen befestigtes Ende aufweisen und die Abstreifer am ersten Ende durch zwei formschlüssige Verbindungen mit dem Rahmen verbunden sind, von denen eine erste formschlüssige Verbindung den Abstreifer in beiden quer zu seiner Längsrichtung gerichteten Richtungen am Rahmen fixiert und eine zweite formschlüssige Verbindung den Abstreifer entlang seiner Längsrichtung am Rahmen fixiert, so dass die zweite Verbindung durch eine Bewegung des Abstreifers quer zu seiner Längsrichtung lösbar und der Abstreifer bei gelöster zweiter Verbindung in seiner Längsrichtung gegenüber dem Rahmen bewegbar und vom Rahmen abnehmbar ist.

### Stand der Technik

Gutaufnehmer werden in der Landwirtschaft verwendet, um auf einem Feld liegendes Gut, das zuvor getrocknet worden sein kann und in einem Schwad abgelegt wurde, aufzunehmen und einer Erntemaschine zuzuführen, in der es zu einem Ballen gepresst (Ballenpresse), abgelegt (Ladewagen), gehäckselt (Feldhäcksler) oder ausgedroschen (Mähdrescher) wird. Derartige Gutaufnehmer umfassen üblicherweise an sich quer zur Vorwärtsrichtung erstreckenden Zinkenträgern angebrachte Zinken. Die Zinkenträger werden in Bewegung versetzt, indem sie selbst oder eine mit ihnen in Antriebsverbindung stehende, zentrische Welle in Rotation versetzt werden. Die Zinkenträger können durch Kurven- oder Nockenbahnen gesteuert werden oder sie sind ungesteuert. Die Zinken erstrecken sich durch Zwischenräume, die zwischen am Rahmen des Gutaufnehmers angebrachten Abstreifern verbleiben, nach außen und bewegen sich entlang dieser Zwischenräume.

Die Abstreifer werden bei gebräuchlichen Gutaufnehmern durch Schraubverbindungen oder Nieten mit dem Rahmen des Gutaufnehmers verbunden (US 3 397 527 A, DD 258 318 A). Um eine Demontage der Abstreifer zu vereinfachen, wurde vorgeschlagen, die oberen und unteren Enden mehrerer Abstreifer nicht direkt am Rahmen, sondern an jeweils einer unteren und einer oberen Platte anzuschrauben, die ihrerseits am Rahmen des Gutaufnehmers angeschraubt wird (US 5 052 171 A). Bei der Herstellung eines Gutaufnehmers ist dennoch ein beträchtlicher Aufwand vonnöten, um die Vielzahl der Schraubverbindungen herzustellen.

Die US 1 877 519 A beschreibt einen anderen Gutaufnehmer, bei dem die Abstreifer an ihrem oberen Ende eine S-förmige Zunge haben, die in einen passenden Schlitz im Rahmen eingeführt wird. An ihrem unteren Ende weisen die Abstreifer einen Schlitz auf, durch den sich eine vom Rahmen nach unten erstreckende Zunge erstreckt. Durch eine Öffnung an der Unterseite der Zunge wird ein Federstift gesteckt, um den Abstreifer zu sichern. Zum Abziehen des unteren Endes des Abstreifers von der Zunge ist ein Spezialwerkzeug vorgesehen. Hier sind keine Schraubverbindungen mehr anzubringen, jedoch ist eine hohe Genauigkeit der Abmessungen der Schlitze und Zungen erforderlich, um unerwünschte Schwingbewegungen der Abstreifer gegenüber dem Rahmen zu vermeiden.

Die US 3 613 345 A schlägt einen Gutaufnehmer vor, bei dem die Abstreifer an ihren rückwärtigen Enden durch Schraubverbindungen mit am Rahmen befestigt sind. Weiter vorn weisen die Abstreifer Stifte auf, die in geeignete Öffnungen in mit dem Rahmen verbundenen Elementen eindringen. Durch die Stifte wird zwar die Festigkeit der Anbringung der Abstreifer erhöht; der mit der Anbringung der dennoch vorgesehenen Schraubverbindungen verbundene Aufwand bleibt aber erhalten.

Die US 3 226 921 A beschreibt einen als gattungsbildend angesehenen Gutaufnehmer, dessen Abstreifer an beiden Enden zwei Öffnungen aufweisen. Die hintere Öffnung ist lang gestreckt und hat an ihrem rückwärtigen Ende größere seitliche Abmessungen als an ihrem vorderen Ende. Mit dem Rahmen des Gutaufnehmers verbundene Halterungen weisen einen vorderen Stift und einen hinteren, mit einem Kopf versehenen Stift auf. Durch diese Anordnung wird es möglich, die hinteren Öffnungen der Abstreifer über den Kopf des hinteren Stifts zu stecken. Der Abstreifer wird dann nach vorn gezogen, so dass die vorderen Stifte der Halterung in die vorderen Öffnungen der Abstreifer eindringen und die Köpfe der hinteren Stifte von außen an den Rädern der hinteren Öffnungen der Abstreifer anliegen. Die Abstreifer werden demnach durch die vorderen Stifte in der Längsrichtung der Abstreifer und in seitlicher Richtung fixiert und durch die hinteren Stifte in vertikaler Richtung und in seitlicher Richtung. Demnach sind die Verbindungen ohne Werkzeug lösbar. Da jedoch beide Enden der Abstreifer in der beschriebenen Weise fixiert sind, muss der Abstreifer in sich hinreichend flexibel sein, um die Verbindungen anbringen und lösen zu können. Das hat aber zur Folge, dass der Abstreifer mangels einer permanenten Fixierung auch durch Vibrationen, z. B. Stöße beim Überfahren von Hindernissen, dazu veranlasst werden kann, sich vom Rahmen zu lösen.

### Aufgabe

Das der Erfindung zu Grunde liegende Problem wird darin gesehen, einen Gutaufnehmer bereitzustellen, dessen Abstreifer sich zwar einerseits ohne großen Aufwand montieren lassen, andererseits aber hinreichend sicher befestigt sind.

Dieses Problem wird erfindungsgemäß durch die Lehre des Patentanspruchs 1 gelöst, wobei in den weiteren Patentansprüchen Merkmale aufgeführt sind, welche die Lösung in vorteilhafter Weise weiterentwickeln.

Der Gutaufnehmer umfasst in an sich bekannter Weise einen Rahmen und einen daran abgestützten, bewegbaren Zinkenträger, welcher gesteuert oder ungesteuert sein kann und Zinken trägt. Mit dem Rahmen sind weiterhin Abstreifer verbunden, die in einer seitlichen, d. h. sich quer zu einer Vorwärtsrichtung des Gutaufnehmers erstreckenden Richtung nebeneinander angeordnet sind und zwischen denen Zwischenräume verbleiben. Die Zinken erstrecken sich durch die Zwischenräume nach außen und bewegen sich entlang der Zwischenräume. Die Abstreifer sind jeweils an einem ersten Ende durch zwei formschlüssige Verbindungen mit dem Rahmen verbunden, von denen eine erste formschlüssige Verbindung den Abstreifer in beiden quer zu seiner Längsachse gerichteten Richtungen am Rahmen fixiert und eine zweite formschlüssige Verbindung den Abstreifer entlang seiner Längsachse am Rahmen fixiert. Die zweite Verbindung ist durch eine Bewegung des Abstreifers quer zu seiner Längsrichtung lösbar. Der Abstreifer ist bei gelöster zweiter Verbindung in seiner Längsrichtung gegenüber dem Rahmen bewegbar und vom Rahmen abnehmbar. An seinem zweiten Ende ist der in sich steif ausgeführte Abstreifer durch eine kraftschlüssige Verbindung, insbesondere durch eine Schraubverbindung, mit dem Rahmen verbunden.

Auf diese Weise erreicht man, dass der Abstreifer an seinem ersten Ende schnell und einfach vom Rahmen lösbar und wieder anbringbar ist. Da er in sich steif und an seinem zweiten Ende kraftschlüssig am Rahmen befestigt ist, ist nicht zu befürchten, dass er sich in unerwünschter Weise durch beim Betrieb entstehende Vibrationen oder Stöße am ersten Ende vom Rahmen lösen kann.

Die erste formschlüssige Verbindung umfasst vorzugsweise ein den Abstreifer von vier Seiten her umfassendes, ein- oder mehrteiliges Element, das mit dem Rahmen verbunden ist. Es erübrigt sich, am Abstreifer besondere Merkmale anzubringen, mit denen das Element zusammenwirken würde.

Die zweite formschlüssige Verbindung kann einen Stift und eine Öffnung umfassen, in die der Stift eindringen kann. Dabei ist beliebig, ob der Stift am Abstreifer oder am Rahmen vorgesehen ist. Die Öffnung ist entweder am Rahmen oder im Abstreifer vorgesehen.

Der Gutaufnehmer kann an landwirtschaftlichen Erntemaschinen Verwendung finden, wie beispielsweise einem Feldhäcksler, einem Mähdrescher oder einer Ballenpresse, beispielsweise in der Art einer Rundballen- oder einer Großballenpresse.

### Ausführungsform

In den Zeichnungen ist ein nachfolgend näher beschriebenes Ausführungsbeispiel der Erfindung dargestellt. Es zeigt:
- Fig. 1: eine Frontansicht eines Gutaufnehmers einer landwirtschaftlichen Erntemaschine,
- Fig. 2: eine perspektivische Ansicht des Gutaufnehmers entlang der Linie 2-2 der Figur 1,
- Fig. 3: eine perspektivische Ansicht eines Rahmenteils und eines Abstreifers im demontierten Zustand,
- Fig. 4: eine perspektivische Ansicht des Rahmenteils von unten, wobei der Abstreifer mit seinem ersten Ende am Rahmenteil befestigt ist, und
- Fig. 5: eine perspektivische Ansicht des Rahmenteils und des Abstreifers in einer Position, in der das zweite Ende des Abstreifers mit dem Rahmenteil verschraubt werden kann.

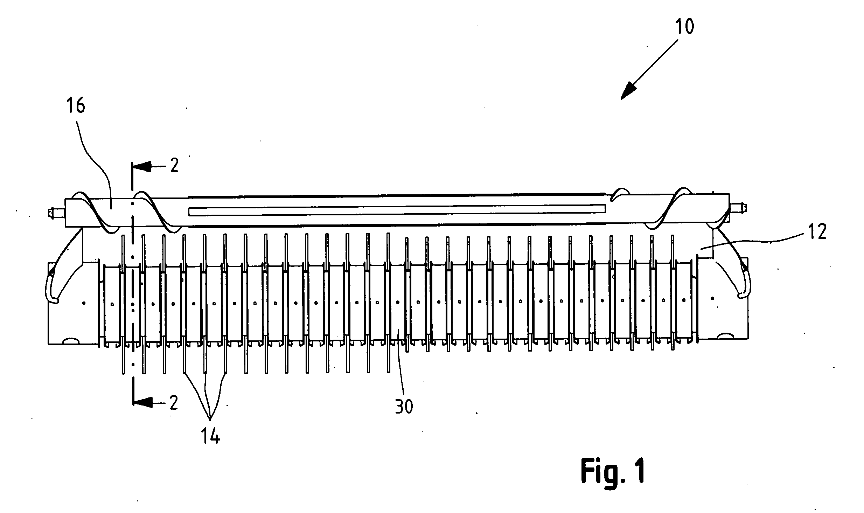

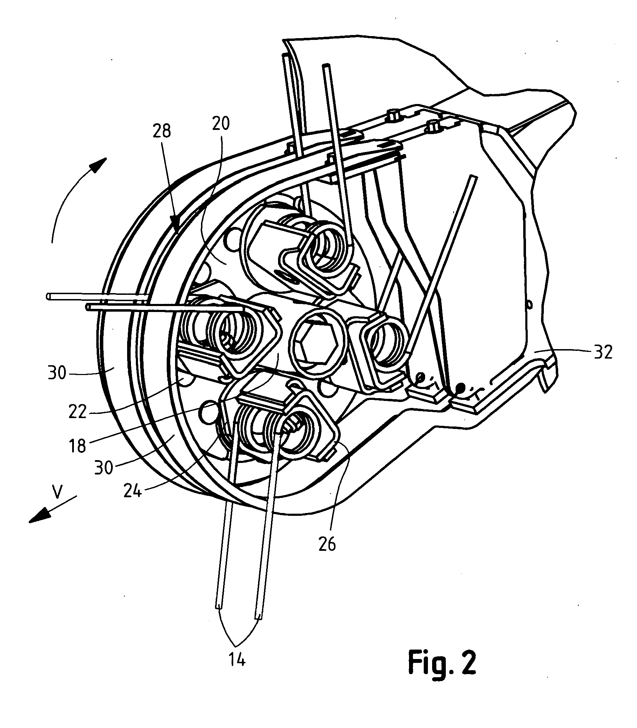

In der Figur 1 ist eine perspektivische Frontansicht eines Gutaufnehmers 10 für Erntegut, einer so genannten Pick-Up dargestellt, der an Ballenpressen, Ladewagen, Schwadern, Mähdreschern oder Feldhäckslern verwendbar ist. Der Aufnehmer umfasst einen Rahmen 12. Ein Aufnehmerrotor mit Zinken 14 ist im Rahmen 12 drehbar gelagert und mit dessen Hilfe vorzugsweise in seiner Höhe über dem Boden einstellbar. Dem Gutaufnehmer 10 ist weiterhin ein ebenfalls am Rahmen 12 drehbar gelagerter Niederhalterrotor 16 zugeordnet, der in entgegen gesetzter Richtung zum Aufnehmerrotor rotiert. Im Folgenden beziehen sich Richtungsangaben, wie seitlich, unten und oben auf die Vorwärtsbewegungsrichtung V des Gutaufnehmers 10, die in der Figur 1 aus der Ebene des Papiers heraus nach oben und in der Figur 2 nach links vorn verläuft.

Der Aufnehmerrotor umfasst eine zentrale, zylindrische Welle 18, die sich über die Breite des Gutaufnehmers 10 erstreckt und an ihren Enden am Rahmen 12 des Gutaufnehmers 10 gelagert ist. Über die Länge der Welle 18 sind mehrere koaxial zur Welle 18 angeordnete, kreisförmige Halterungselemente 20 mit einer Vielzahl gleichmäßig um den Umfang der Welle 18 verteilter Bohrungen 22 befestigt, die parallel zur Welle 18 verlaufen. In den Bohrungen 22 sind Lagerungen 24 angeordnet. Axial durch die Lagerungen 24 erstrecken sich Schrauben, deren Gewinde in entsprechende Gewinde in den Enden U-förmiger Zinkenträger 26 eingeschraubt sind, die sich parallel zur Welle 18 erstrecken. Durch die Schrauben und die Lagerungen 24 sind die Zinkenträger 26 um ihre Längsachse drehbar am Halterungselement 20 festgelegt. Es sind auf jeder Seite des Halterungselements 20 vier Zinkenträger 26 angeordnet.

An den Zinkenträgern 26 sind die Zinken 14 befestigt, die aus federndem Material hergestellt sind und einen spiralförmigen Abschnitt umfassen, der mit dem Zinkenträger 26 verbunden ist und an dessen Enden sich nach außen erstreckende Abschnitte vorgesehen sind.

Die Zinken 14 erstrecken sich durch Schlitze 28, die zwischen mit dem Rahmen 12 verbundenen Abstreifern 30 verbleiben und sind eingerichtet, Erntegut aufzunehmen und nach oben hinten zu fördern, wenn der Gutaufnehmer 10 über ein Feld bewegt wird, auf dem das Erntegut in der Regel in einem Schwad liegt. Dazu ist die Welle 18 mit einem Antrieb gekoppelt, der sie in Drehung versetzt. Die Zinkenträger 26 mit den Zinken 14 werden über die Welle 18, das drehfest mit der Welle 18 verbundene Halterungselement 20 und die Lagerungen 24 angetrieben, so dass sie sich um die Welle 18 drehen. Die Winkelstellung der Zinkenträger 26 gegenüber der Welle 18 wird an den äußeren Enden durch an sich bekannte Einrichtungen (Exzentersteuerungen bzw. Kurvenbahnen) gesteuert. Es sind aber auch Ausführungsformen mit nicht gesteuerten Zinken 14 denkbar, bei denen die Zinkenträger 26 starr am Halterungselement 20 befestigt sind.

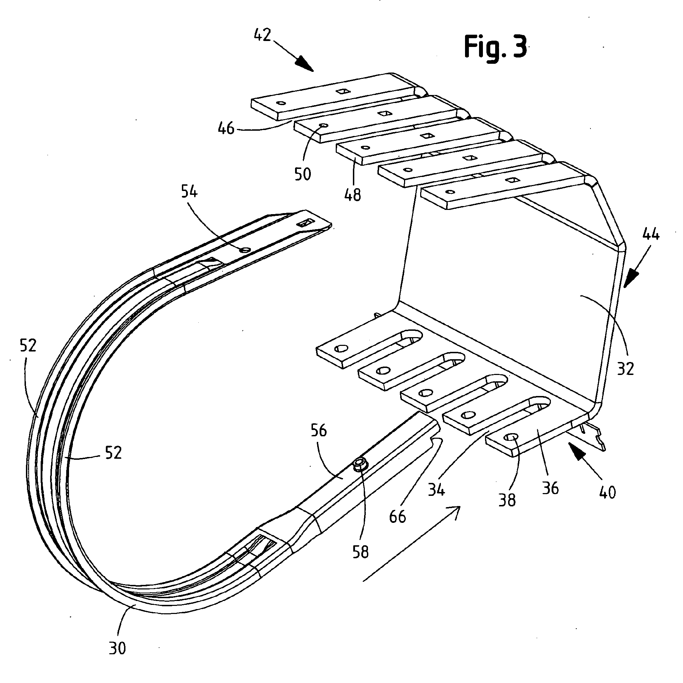

In der Figur 3 ist eine perspektivische Ansicht eines rückwärtigen Rahmenteils 32 und eines Abstreifers 30 dargestellt. Der rückwärtige Rahmenteil 32 ist mit dem Rahmen 12 starr verbunden und bildet ein U-förmiges Element, dessen mittlerer Schenkel 44 sich etwa vertikal erstreckt und eine Rückwand eines die Zinkenträger 26 enthaltenden Innenraums bilden, dessen Vorderseite durch die Abstreifer 30 und dessen Ober- und Unterseite im vorderen Bereich durch die Abstreifer 30 und im rückwärtigen Bereich durch die unteren Schenkel 40 und oberen Schenkel 42 des rückwärtigen Rahmenteils 32 begrenzt werden. Der rückwärtige Rahmenteil 32 kann sich über die Breite des Aufnehmerrotors oder einen Teilbereich davon erstrecken; im zweiten Fall sind mehrere rückwärtige Rahmenteile 32 seitlich nebeneinander angeordnet. Der rückwärtige Rahmenteil 32 ist in der dargestellten Ausführungsform durch Biegen eines Blechs einteilig hergestellt; er könnte aber auch mehrteilig aus Einzelteilen zusammengesetzt sein.

Der untere Schenkel 40 des rückwärtigen Rahmenteils 32 ist, wie anhand der Figuren 3 bis 5 erkennbar ist, mit mehreren Einschnitten 34 versehen, die eine untere rückwärtige Verlängerung der Schlitze 28 bilden. Zwischen den Einschnitten 34 sind Stege 36 gebildet, in deren vorderen Bereichen Öffnungen 38 vorgesehen sind, die als gestanzte Löcher oder Bohrungen ausgeführt sein können.

Der obere Schenkel 42 des rückwärtigen Rahmenteils 32 ist, wie anhand der Figuren 3 bis 5 erkennbar ist, mit mehreren Einschnitten 46 versehen, die eine obere rückwärtige Verlängerung der Schlitze 28 bilden. Zwischen den Einschnitten 48 sind Zungen 48 gebildet, in deren vorderen Bereichen Gewindebohrungen 50 vorgesehen sind.

Die Abstreifer 30 sind kreisbogenförmig geformt und weisen an ihren seitlichen Rändern über ihre gesamte Länge nach außen gerichtete, seitliche Verstärkungsrippen 52 auf, um den Abstreifern 30 eine hinreichende Stabilität zu verleihen. An ihren oberen Enden weisen die Abstreifer 30 eine Öffnung 54 auf, die als gestanzte Löcher oder Bohrungen ausgeführt sein können. An ihren unteren Enden gehen die Abstreifer 30 in lang gestreckte Endabschnitte 56 mit U-förmigem Querschnitt über, an deren Oberseite ein Stift 58 angebracht ist.

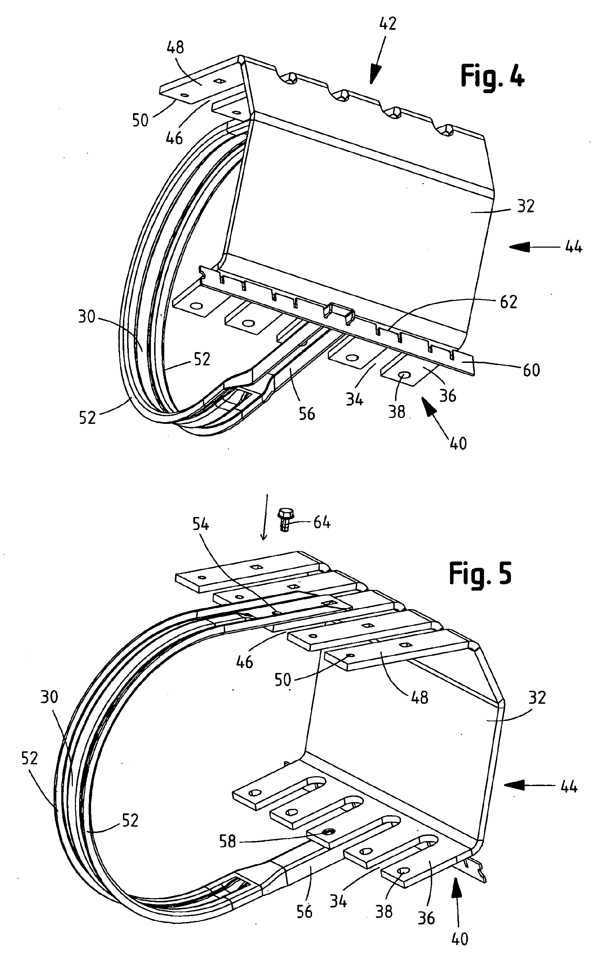

Anhand der Figur 4 ist erkennbar, dass unterhalb des unteren Schenkels 40 an der Rückseite der Einschnitte 34 eine sich in seitlicher Richtung erstreckende Strebe 60 angeordnet ist, in der Öffnungen 62 mit U-förmigem Querschnitt eingebracht sind. Die Schenkel des U erstrecken sich, genau wie die der Endabschnitte 56, nach unten.

Die Montage der Abstreifer 30 am rückwärtigen Rahmenteil 32 erfolgt, wie anhand der Figuren 3 bis 5 erkennbar ist. Nachdem der Rahmenteil 32 am Rahmen 12 befestigt wurde und anschließend die Welle 18 mit den Halterungselementen 20 und den Zinkenträgern 26 und Zinken 14 am Rahmen 12 befestigt wurden, wird ein Abstreifer 30 in der Orientierung, wie sie in der Figur 3 dargestellt ist, vor dem Rahmenteil 32 positioniert und mit dem Endabschnitt 56 in die Öffnung 62 eingeschoben. Dabei ist der Endabschnitt 56 weiter nach unten geneigt als der Steg 36, damit der Stift 58 nicht am Steg 36 anstößt. Ist der Abstreifer 30 so weit in die Öffnung 62 geschoben, dass eine rückwärtige Kante 66 des Endabschnitts 56 an der Strebe 60 anliegt, wird der Abstreifer 30 im Uhrzeigersinn nach oben gedreht. Dabei gelangt der Stift 58 in die Öffnung 38 und die Oberseite des Abstreifers 30 mit der Öffnung 54 kommt von oben her auf der Oberseite der zugehörigen Zunge 48 zur Anlage. Dort wird der Abstreifer 30 dann schließlich, wie in der Figur 5 angedeutet, nur mittels einer einzigen Schraube 64 fixiert, die die Öffnung 54 durchdringt und in der Gewindebohrung 50 fixiert wird. Eine Demontage erfolgt in umgekehrter Weise.

Die U-förnige Öffnung 62 bildet gemeinsam mit dem Endabschnitt 56 eine erste lösbare formschlüssige Verbindung, die ein erstes (unteres) Ende des Abstreifers 30 in beiden quer zu seiner Längsachse verlaufenden Richtungen, nämlich in seitlicher und vertikaler Richtung, am Rahmenteil 32 fixiert. Der Stift 58 und die Öffnung 38 im Steg 36 bilden eine zweite lösbare formschlüssige Verbindung zwischen dem ersten Ende des Abstreifers 30 und dem Rahmenteil 32, die den Abstreifer in seiner Längsrichtung (Vorwärtsrichtung) am Rahmenteil 32 fixiert. Die zweite formschlüssige Verbindung fixiert den Abstreifer 30 zusätzlich in einer zweiten (seitlichen) Richtung am Rahmenteil 32. Die zweite formschlüssige Verbindung kann (nach Abnahme der Schraube 64) gelöst werden, indem man den Abstreifer 30 quer zu seiner Längsrichtung, nämlich in vertikaler Richtung bewegt bzw. im Gegenuhrzeigersinn dreht. Ist die zweite formschlüssige Verbindung gelöst, kann die erste formschlüssige Verbindung aufgetrennt werden, indem man den Abstreifer in seiner Längsrichtung (d. h. in Vorwärtsrichtung V) bewegt. Die Schraube 64 bildet eine kraftschlüssige Verbindung zwischen dem zweiten (oberen) Ende des Abstreifers 30 und dem Rahmenteil 32.

Die formschlüssige Anbringung der Abstreifer 30 an ihrem ersten Ende verkürzt die Zeit zur Montage oder Demontage der Abstreifer 30 wesentlich, weil die Zahl der festzuziehenden oder zu lösenden Schrauben 64 gegenüber an beiden Enden verschraubten Abstreifern 30 halbiert wurde. Da die Abstreifer 30 in sich relativ steif und durch die Schraube 64 kraftschlüssig mit dem Rahmenteil 32 verbunden sind, sind keine Vibrationsbewegungen am ersten Ende des Abstreifers 30 zu erwarten, die zu einer unerwünschten Lösung des ersten Endes des Abstreifers 30 vom Rahmenteil 32 führen könnten.

## Patentansprüche

1. Gutaufnehmer (10) umfassend einen Rahmen (12), wenigstens einen gegenüber dem Rahmen (12) in eine Bewegung versetzbaren Zinkenträger (26), am Zinkenträger (26) befestigte Zinken (14) und quer zur Vorwärtsrichtung (V) nebeneinander angeordnete Abstreifer (30), zwischen denen Zwischenräume (28) gebildet sind, durch die sich die Zinken (14) nach außen erstrecken und entlang derer sich die Zinken (14) bewegen können, wobei die Abstreifer (30) ein erstes, lösbar am Rahmen (12) befestigtes Ende und ein zweites, lösbar am Rahmen (12) befestigtes Ende aufweisen und die Abstreifer (30) am ersten Ende durch zwei formschlüssige Verbindungen (56, 62, 38, 58) mit dem Rahmen (12) verbunden sind, von denen eine erste formschlüssige Verbindung (56, 62) den Abstreifer (30) in beiden quer zu seiner Längsrichtung gerichteten Richtungen am Rahmen (12) fixiert und eine zweite formschlüssige Verbindung (38, 58) den Abstreifer (30) entlang seiner Längsrichtung am Rahmen (12) fixiert, so dass die zweite Verbindung (38, 58) durch eine Bewegung des Abstreifers (30) quer zu seiner Längsrichtung lösbar und der Abstreifer (30) bei gelöster zweiter Verbindung (38, 58) in seiner Längsrichtung gegenüber dem Rahmen (12) bewegbar und vom Rahmen (12) abnehmbar ist, **dadurch gekennzeichnet, dass** die Abstreifer (30) in sich steif und an ihrem zweiten Ende jeweils durch eine kraftschlüssige Verbindung mit dem Rahmen (12) verbunden sind.

2. Gutaufnehmer (10) nach Anspruch 1, **dadurch gekennzeichnet, dass** die Abstreifer (30) an ihrem zweiten Ende durch eine Schraubverbindung mit einer Schraube (64) mit dem Rahmen (12) verbunden sind.

3. Gutaufnehmer (10) nach Anspruch 1 oder 2, **dadurch gekennzeichnet, dass** die erste formschlüssige Verbindung (56, 62) ein den Abstreifer (30) umschließendes, mit dem Rahmen (12) verbundenes Element (60) umfasst.

4. Gutaufnehmer (10) nach einem der Ansprüche 1 bis 3, **dadurch gekennzeichnet, dass** die zweite formschlüssige Verbindung einen Stift (58) und eine Öffnung (38) umfasst, in die der Stift (58) bei geschlossener Verbindung eindringt.

5. Landwirtschaftliches Erntegerät, vorzugsweise in der Art eines Feldhäckslers, eines Mähdreschers oder einer Ballenpresse, mit einem Gutaufnehmer (10) gemäß einem der vorherigen Ansprüche.

## Claims

1. Pick-up (10), comprising a frame (12), at least one tine carrier (26) which can be moved in relation to the frame (12), tines (14) which are fastened to the tine carrier (26) and strippers (30) which are arranged next to one another transversely with respect to the forwards direction (V) and between which intermediate spaces (28) are formed, through which the tines (14) extend to the outside and along which the tines (14) can move, wherein the strippers (30) have a first end fastened releaseably to the frame (12) and a second end fastened releaseably to the frame (12), and the strippers (30) are connected at the first end to the frame (12) by two interlocking connections (56, 62, 38, 58), of which a first interlocking connection (56, 62) fixes the stripper (30) to the frame (12) in both directions directed transversely with respect to its longitudinal direction, and a second interlocking connection (38, 58) fixes the stripper (30) along its longitudinal direction to the frame (12) such that the second connection (38, 58) can be released by a movement of the stripper (30) transversely with respect to its longitudinal direction, and, when the second connection (38, 58) is released, the stripper (30) can be moved in its longitudinal direction in relation to the frame (12) and can be removed from the frame (12), **characterized in that** the strippers (30) are inherently stiff and are each connected at their second end to the frame (12) by a frictional connection.

2. Pick-up (10) according to Claim 1, **characterized in that** the strippers (30) are connected at their second end to the frame (12) by a screw connection with a screw (64).

3. Pick-up (10) according to Claim 1 or 2, **characterized in that** the first interlocking connection (56, 62) comprises an element (60) which surrounds the stripper (30) and is connected to the frame (12).

4. Pick-up (10) according to one of Claims 1 to 3, **characterized in that** the second interlocking connection comprises a pin (58) and an opening (38) into which the pin (58) penetrates when the connection is closed.

5. Agricultural harvesting device, preferably in the manner of a field chopper, a combine harvester or a baler, with a pick-up (10) according to one of the preceding claims.

## Revendications

1. Dispositif de réception de produits (10) comprenant un châssis (12), au moins un support de dents (26) pouvant être mis en mouvement par rapport au châssis (12), des dents (14) fixées sur le support de dents (26) et des dispositifs de raclage (30) disposés transversalement à la direction d'avance (V) les uns à côté des autres, entre lesquels sont formés des espaces intermédiaires (28), à travers lesquels les dents (14) s'étendent vers l'extérieur et le long desquels les dents (14) peuvent se déplacer, les dispositifs de raclage (30) présentant une première extrémité fixée de manière détachable au châssis (12) et une deuxième extrémité fixée de manière détachable au châssis (12), et les dispositifs de raclage (30) étant connectés au châssis (12) au niveau de la première extrémité par deux connexions par engagement par correspondance géométrique (56, 62, 38, 58), dont une première connexion par engagement par correspondance géométrique (56, 62) fixe le dispositif de raclage (30) sur le châssis (12) dans les deux directions orientées transversalement à la direction longitudinale du dispositif de raclage, et dont une deuxième connexion par engagement par correspondance géométrique (38, 58) fixe le dispositif de raclage (30) sur le châssis (12) le long de la direction longitudinale du dispositif de raclage, de sorte que la deuxième connexion (38, 58), par un déplacement du dispositif de raclage (30) transversalement à sa direction longitudinale puisse être détachée et que le dispositif de raclage (30) puisse être déplacé par rapport au châssis (12) dans sa direction longitudinale lorsque la deuxième connexion (38, 58) est relâchée, et puisse être enlevé du châssis (12), **caractérisé en ce que** les dispositifs de raclage (30) sont rigides en soi et sont connectés au châssis (12) à leur deuxième extrémité, à chaque fois par une connexion par engagement par force.

2. Dispositif de réception de produits (10) selon la revendication 1, **caractérisé en ce que** les dispositifs de raclage (30) sont connectés au châssis (12) à leur deuxième extrémité, par une connexion vissée avec une vis (64).

3. Dispositif de réception de produits (10) selon la revendication 1 ou 2, **caractérisé en ce que** la première connexion par engagement par correspondance géométrique (56, 62) comprend un élément (60) connecté au châssis (12) et entourant le dispositif de raclage (30).

4. Dispositif de réception de produits (10) selon l'une quelconque des revendications 1 à 3, **caractérisé en ce que** la deuxième connexion par engagement par correspondance géométrique comprend une goupille (58) et une ouverture (38), dans laquelle la goupille (58) vient en prise lorsque la connexion est fermée.

5. Machine agricole de récolte, de préférence du type faucheuse-hacheuse, moissonneuse-batteuse ou presse à balles, comprenant un dispositif de réception de produits (10) selon l'une quelconque des revendications précédentes.
